# EUROPÄISCHE PATENTANMELDUNG

(11) **EP 1 380 818 A1**
(43) Veröffentlichungstag der Anmeldung: **14.01.2004**
(21) Anmeldenummer: 03012981.1
(22) Anmeldetag: 07.06.2003
(51) Int. Cl.: G01G 19/08, B62B 3/06

(54) **Plattformwaage mit Fahrrollen**

(30) Priorität: 10.07.2002 DE 20210651 U
(71) Anmelder: SARTORIUS AG, 37075 Göttingen (DE)
(72) Erfinder: Popel, Ingolf, 37083 Göttingen (DE); Höfelmeyer, Reinhard, 49124 Georgsmarienhütte (DE)

(57) **Zusammenfassung**

Die Erfindung bezieht sich auf eine Plattformwaage mit einer Lastplattform.
Aufgabe der Erfindung ist es, eine Plattformwaage der eingangs genannten Art so weiterzubilden, dass sie auch bei hohem Eigengewicht von einer einzigen Person bewegt werden kann.
Erfindungsgemäß wird dies dadurch erreicht, dass die Plattformwaage mindestens drei Fahrrollen aufweist und dass die Fahrrollen höhenverstellbar sind und aus einer Wägestellung, in der die Fahrrollen keinen Kontakt zum Boden haben, in eine Transportstellung, in der die Fahrrollen Kontakt zum Boden haben und die Plattformwaage tragen, bringbar sind.

## Beschreibung

Die Erfindung bezieht sich auf eine Plattformwaage mit einer Lastplattform, mit mindestens drei Füßen, auf denen die Plattformwaage auf dem Boden steht, und mit Fahrrollen zum Bewegen der Plattformwaage.

Plattformwaagen dieser Art sind allgemein bekannt und z. B. in der DE 88 12 639 U1 beschrieben. Die beiden Fahrrollen stehen dabei seitlich von der Waage ab und berühren in der normalen Wägestellung den Boden nicht. Zum Transport der Waage wird diese einseitig angehoben, dadurch berühren die Fahrrollen den Boden und die Waage kann verfahren werden. - Eine ähnliche Waage ist auch in der DE 199 12 349 C1 beschrieben.

Nachteilig an diesen bekannten Bauarten ist, dass bei größeren und damit schwereren Waagen das Anheben der Waage immer schwieriger wird. Übersteigt das Eigengewicht der Waage etwa 50 kg, so sind zum Anheben bereits zwei Personen notwendig, so dass ein Transport der Waage immer schwieriger wird und die Unfallgefahr während des Transportes im einseitig angehobenen Zustand steigt. Ein Transport der Waage ist dabei nicht nur notwendig, wenn die Waage an einen anderen Einsatzort gebracht werden soll, sondern z. B. auch dann, wenn der Bodenbereich unterhalb der Waage gereinigt werden soll. Diese Reinigung ist z. B. in der Lebensmittelindustrie oder der pharmazeutischen Industrie relativ häufig notwendig, so dass ein häufiger Transport über eine geringe Entfernung notwendig wird.

Aufgabe der Erfindung ist es daher, eine Plattformwaage der eingangs genannten Art so weiterzubilden, dass sie auch bei hohem Eigengewicht von einer einzigen Person bewegt werden kann.

Erfindungsgemäß wird dies dadurch erreicht, dass die Plattformwaage mindestens drei Fahrrollen aufweist und dass die Fahrrollen höhenverstellbar sind und aus einer Wägestellung, in der die Fahrrollen keinen Kontakt zum Boden haben, in eine Transportstellung, in der die Fahrrollen Kontakt zum Boden haben und die Plattformwaage tragen, bringbar sind.

Durch die höhenverstellbaren Fahrrollen kann die Waage ohne direktes Anheben der Waage in die Transportstellung gebracht werden. Durch eine entsprechende Übersetzung der Höhenverstellung kann die von der Bedienperson aufzubringende Betätigungskraft dabei deutlich reduziert werden. Außerdem wird durch die mindestens drei Fahrrollen die Transportstellung ohne äußeren Eingriff statisch stabil beibehalten, die Bedienperson muss also beim Transport das Eigengewicht der Waage nicht halten und ausbalancieren.

Bei der üblichen Bauart von Plattformwaagen mit rechteckiger Lastplattform und vier Füßen in den Ecken des Rechteckes ist es selbstverständlich vorteilhaft, dass die erfindungsgemäße Plattformwaage ebenfalls vier höhenverstellbare Fahrrollen aufweist.

Weitere vorteilhafte Ausgestaltungen ergeben sich aus den Unteransprüchen 2 - 6.

Die Erfindung wird im Folgenden anhand der schematischen Figuren beschrieben. Dabei zeigt:
- Figur 1: eine Aufsicht auf die Plattformwaage,
- Figur 2: einen vertikalen Schnitt durch die Plattformwaage längs der Linie II-II in Figur 1,
- Figur 3: einen vertikalen Schnitt durch die Plattformwaage längs der Linie III-III in Figur 1 in vergrößerter Darstellung,
- Figur 4: eine Fahrrolle aus Figur 2 in vergrößerter Darstellung in Wägestellung und
- Figur 5: die Fahrrolle aus Figur 4 in Transportstellung.

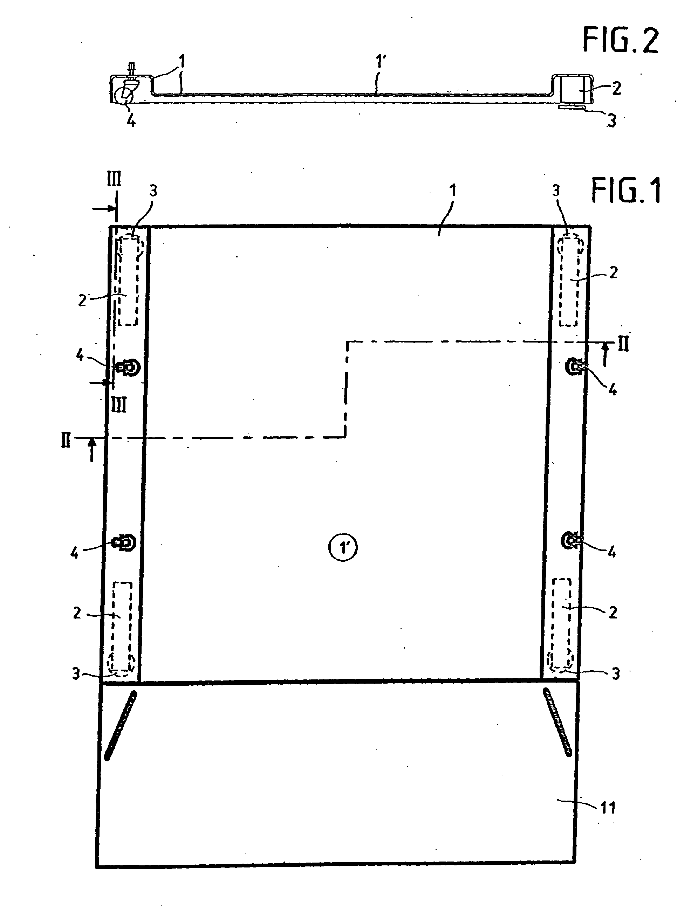

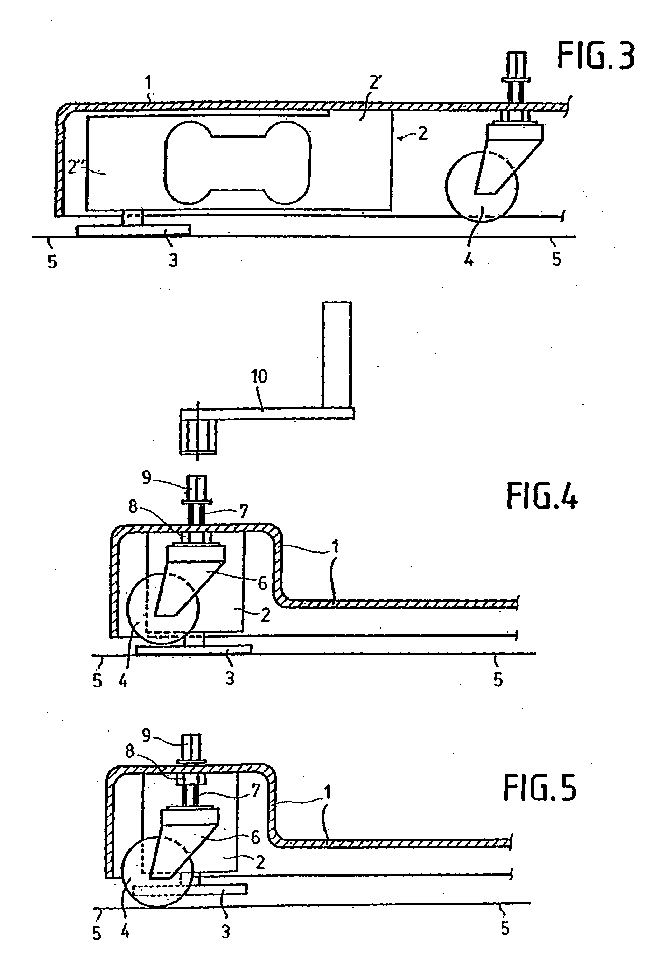

Die Plattformwaage, die in Figur 1 in Aufsicht und in Figur 2 im vertikalen Schnitt längs der Linie II - II in Figur 1 gezeigt ist, besteht im Wesentlichen aus einer Lastplattform 1 und vier Wägezellen 2 mit Füßen 3. Den prinzipiellen Aufbau der Wägezellen 2 erkennt man aus der Figur 3, die einen vertikalen Schnitt längs der Linie III - III in Figur 1 in vergrößerter Darstellung zeigt. Die Wägezelle 2 ist mit ihrem einen Ende 2' an der Lastplattform 1 befestigt, wobei die Details der Befestigung (z. B. Schrauben, Schweißen oder dergleichen) in Figur 3 nicht gezeigt sind; das andere Ende 2" der Wägezelle 2 stützt sich über einen Fuß 3 auf dem Boden 5 ab. Die vier Wägezellen 2 und die vier Füße 3 sind in Figur 1 nur gestrichelt dargestellt, da sie eigentlich unter der Lastplattform verborgen sind. - Wägezellen sind allgemein bekannt, so dass sie in ihrem Aufbau und ihrer Funktion hier nicht im Einzelnen erläutert werden müssen.

Weiter weist die Plattformwaage vier Fahrrollen 4 auf, die in der Nähe der Wägezelle 2 an der Lastplattform 1 drehbar befestigt sind. In der normalen Wägestellung, wie sie in den Figuren 1 - 4 dargestellt ist, lastet das Eigengewicht der Waage (und das Gewicht einer evtL Last) auf den Wägezellen 2, die sich über die Füße 3 auf dem Boden unter der Waage abstützen. Die Fahrrollen 4 berühren den Boden nicht und stellen daher keinen Kraftnebenschluss für die Wägezelle 2 dar.

Die Höhenverstellung der Fahrrollen 4 ist aus den Figuren 4 und 5 erkennbar. Figur 4 ist dabei ein vergrößert dargestellter Ausschnitt der linken Seite von Figur 2. Dabei ist die in Figur 2 der Übersichtlichkeit halber weggelassene Wägezelle 2 hinter der Fahrrolle 4 in Figur 4 mit eingezeichnet. Man erkennt, dass sich in der Wägestellung gemäß Figur 4 die Lastplattform 1 über die Wägezelle 2 und den Fuß 3 auf dem Boden 5 abstützt und die Fahrrolle 4 ohne Bodenberührung ist. Der U-Träger 6 der Fahrrolle 4 ist mittels einer vertikalen Gewindespindel 7 in einer Mutter 8 gelagert und geführt, wobei die Mutter 8 an der Unterseite der Lastplattform 1 befestigt (z. B angeschweißt) ist. Die Gewindespindel 7 läuft am oberen Ende in einem Vierkant oder Sechskant 9 aus. Durch das Aufsetzen einer in Figur 4 getrennt angedeuteten Handkurbel 10 mit einem dem Vierkant bzw. Sechskant entsprechenden Gegenstück kann die Gewindespindel 7 in der Mutter 8 gedreht werden und so deren Höhe verstellt werden. Die in Figur 5 erreichte Höhenstellung ist dann die Transportstellung: Die Fahrrollen 4 haben die Abstützung der Plattformwaage übernommen und die Wägezellen 2 mit den Füßen 3 hängen ohne Bodenberührung in der Luft. In dieser Transportstellung kann die Waage bewegt werden. Die Bedienperson muss dabei nur die Reibung in den Fahrrollen 4 und den von evtl. Bodenunebenheiten erzeugten Widerstand überwinden, sodass auch sehr schwere Waagen von einer einzigen Person problemlos bewegt werden können.

Die Rücküberführung der Plattformwaage von der Transportstellung in die normale Wägestellung erfolgt durch Zurückschrauben aller Fahrrollen 4, wodurch sich die Waage wieder auf die Füße 3 an den Wägezellen 2 absenkt.

Bei der im Vorstehenden beschriebenen Waage weist die Lastplattform 1 einen mittleren Bereich 1' auf (siehe Figur 1 und 2) mit besonders geringer Bauhöhe über dem Boden. Bei Benutzung einer schrägen Auffahrrampe 11 kann dann die Last auf einem Waagen oder einem anderen Fahrzeug direkt auf die Waage transportiert werden (daher die Bezeichnung Durchfahrwaage). Die höhenverstellbaren Fahrrollen können jedoch in gleicher Weise für Plattformwaagen mit ebener Lastplattform benutzt werden. Auf diese Waagen wird die Last z. B. durch Gabelstabler aufgebracht.

Die Größe der Betätigungskraft beim Höhenverstellen der Fahrrollen kann z. B. durch verschieden lange Handkurbelarme und durch verschiedene Gewindesteigungen des Bolzens 7 und der Mutter 8 in weiten Grenzen an die speziellen Randbedingungen jedes Einsatzfalles angepasst werden. Statt mit einer Handkurbel kann bei Benutzung eines Sechskantes 9 die Gewindespindel 7 auch mit einem üblichen Steckschlüssel mit Knarre betätigt werden. Auch die Fahrrolle 4 mit U-Träger 6 und Gewindespindel 7 ist ein Standardkaufteil, so dass die Erfindung gegenüber der Standardwaage nur wenige und preisgünstige Bauelemente zusätzlich benötigt.

Bei der im Vorstehenden beschriebenen Ausführungsform muss jede der vier Fahrrollen einzeln in der Höhe verstellt werden, um von der Wägestellung in die Transportstellung zu gelangen bzw. umgekehrt. Selbstverständlich ist es auch möglich, die Höhenverstellung von je zwei Fahrrollen oder von allen vier Fahrrollen zu synchronisieren. Dazu sind nur allgemein bekannte Hilfsmittel, wie z. B. Zahnradübertragungen, Zahnriemen oder dergleichen, notwendig, die jeder Maschinenbaufachmann entwerfen kann. Selbstverständlich ist auch ein motorischer Antrieb für die Höhenverstellung möglich.

Bei der in den Figuren gezeigten Handbetätigung der Höhenverstellung wird die nach oben herausragende Gewindespindel 7 mit dem Vierkant bzw. Sechskant 9 in der normalen Wägestellung vorteilhafterweise durch eine aufgesetzte oder aufgeschraubte Abdeckhülse gegen Verschmutzung und auch gegen Beschädigung beim Bewegen einer Last geschützt (nicht gezeichnet).

Selbstverständlich kann die Betätigung der Höhenverstellung aber auch von der Seite her erfolgen, um vorstehende Teile auf der Oberseite der Lastplattform zu vermeiden. Dazu könnte z. B. in der Mitte zwischen zwei Fahrrollen ein Exzenter angebracht sein, der diese beiden Fahrrollen durch je einen Hebel auf- und abbewegt (nicht gezeichnet).

## Patentansprüche

1. Plattformwaage mit einer Lastplattform (1), mit mindestens drei Füßen (3), auf denen die Plattformwaage auf dem Boden steht, und mit Fahrrollen zum Bewegen der Plattformwaage, **dadurch gekennzeichnet, dass** die Plattformwaage mindestens drei Fahrrollen (4) aufweist und dass die Fahrrollen höhenverstellbar sind und aus einer Wägestellung, in der die Fahrrollen keinen Kontakt zum Boden haben, in eine Transportstellung, in der die Fahrrollen Kontakt zum Boden haben und die Plattformwaage tragen, bringbar sind.

2. Plattformwaage nach Anspruch 1 mit vier Füßen (3), **dadurch gekennzeichnet, dass** die Plattformwaage vier höhenverstellbare Fahrrollen (4) aufweist.

3. Plattformwaage nach Anspruch 2 mit vier Wägezellen (2), wobei jede Wägezelle an ihrem einen Ende (2") einen Fuß (3) zur Abstützung auf dem Boden aufweist und an ihrem anderen Ende (2') mit der Lastplattform (1) verbunden ist und diese trägt, **dadurch gekennzeichnet, dass** die vier höhenverstellbaren Fahrrollen (4) in der Nähe der Wägezellen (2) an der Lastplattform (1) befestigt sind.

4. Plattformwaage nach Anspruch 3, **dadurch gekennzeichnet, dass** die Höhenverstellung durch eine vertikale, drehbare Gewindespindel (7) im Zusammenwirken mit einer an der Lastplattform (1) angebrachten Mutter (8) erfolgt.

5. Plattformwaage nach Anspruch 4, **dadurch gekennzeichnet, dass** die Gewindespindel (7) an ihrem freien Ende einen Vierkant oder Sechskant (9) aufweist.

6. Plattformwaage nach einem der Ansprüche 4 oder 5, **dadurch gekennzeichnet, dass** das nach oben aus der Lastplattform (1) herausragende Ende der Gewindespindel (7) durch eine Abdeckhülse abdeckbar ist.
